# EUROPEAN PATENT APPLICATION

(11) **EP 2 078 856 A2**
(43) Date of publication of application: **15.07.2009**
(21) Application number: 09150078.5
(22) Date of filing: 06.01.2009
(51) Int. Cl.: F03D 11/02, F03D 11/00

(54) **Shaft for use in a wind energy system and wind energy system**

(30) Priority: 11.01.2008 US 972972
(71) Applicant: General Electric Company, Schenectady, NY 12345 (US)
(72) Inventor: Achenbach, Patrick, 48431, Rheine (DE)
(74) Representative: Bedford, Grant Richard

(57) **Abstract**

A shaft for use in a wind energy system (100) is provided, with the shaft having a hollow shaft body (160); a cable fixation being connected to the hollow shaft body (160) and extending axially in the hollow shaft body (160), the cable fixation being adapted for fixing a cable bundle (261); and a tensioner being adapted for tensioning the cable fixation in an axial direction of the hollow shaft body (160).

## Description

The present invention relates generally to a shaft for use in a wind energy system with a cable fixation, a fixation device, a wind energy system and a method of constructing a shaft.

It is known that cables have to be fixed in shafts of wind energy systems. The routing of cable bundles through the main shaft is e. g. necessary for providing rotor blade actuators with electrical energy and control signals. Known systems for fixing cable bundles in main shafts of wind energy systems use plastic pipes and foam. However, the cable bundles are subjected to several displacements and stresses. Especially, radial movements of the cable during operation cause an alternating load on the cable. Failures due to fatigue are a possible consequence. Therefore these cable bundles have to be exchanged from time to time. Thus, the cable bundle has to be protected from wear and an exchange of the cable bundle should be made easy.

In view of the above, according to one aspect of the present invention a shaft for use in a wind energy system is provided with the shaft having a hollow shaft body; a cable fixation that is connected to the hollow shaft body and that extends axially in the hollow shaft body, wherein the cable fixation is adapted for fixing a cable bundle; and a tensioner being adapted for tensioning the cable fixation in an axial direction of the hollow shaft body.

According to another aspect of the invention, a fixation device is provided including a cable fixation being connectable to a hollow shaft body and being adapted for fixing a cable bundle in the hollow shaft body, the fixation device comprising a tensioner that is adapted for tensioning the cable fixation in an axial direction of the hollow shaft body.

According to another aspect of the invention, a wind energy system is provided with at least one shaft according to embodiments herein.

According to another aspect of the invention, a wind energy system is provided with at least one fixation device according to embodiments herein.

According to another aspect of the invention, a method for constructing a fixation device for use in a wind energy system is provided, wherein the method comprises providing a cable fixation; applying the cable fixation in a hollow shaft body of a main shaft of the wind energy system, the cable fixation being adapted for fixing a cable bundle; and tensioning the cable fixation in an axial direction of the hollow shaft body.

Further aspects, advantages and features of the present invention are apparent from the dependent claims, the description and the accompanying drawings.

A full and enabling disclosure of the present invention, including the preferred mode thereof, to one of ordinary skill in the art, is set forth more particularly in the remainder of the specification, including reference to the accompanying figures wherein:
Fig. 1 is a schematic view of a wind energy system according to embodiments described herein.
Fig. 2 is a schematic drawing of a main shaft for use in a wind energy system according to embodiments described herein.
Fig. 3 shows schematically an embodiment of a detail of Fig. 2.
Fig. 4 is a schematic view of a detail of an embodiment of a support member.
Fig. 5 shows the embodiment of Fig. 2 in another view.

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

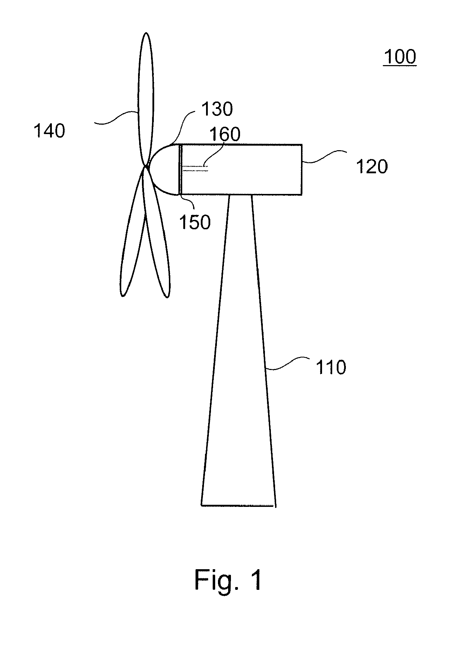

Fig. 1 is a schematic view of a wind energy system 100, also referred to as a wind turbine. The wind energy system 100 includes a tower 110 to which a machine nacelle 120 is mounted at its top end. A hub 130 having three rotor blades 140 is mounted thereto.

The hub 130 is mounted to a lateral end of the machine nacelle 120 and may be connected to a hub flange 150 of a main shaft located inside the machine nacelle 120 of the wind energy system 100. In Fig. 1, the only part of the main shaft shown in solid lines is the hub flange 150. Other parts of the main shaft are located inside of the machine nacelle 120, like a hollow shaft body 160. The hollow shaft body 160 is normally not visible in the configuration shown in Fig. 1 and is therefore plotted with dotted lines.

According to embodiments described herein, the main shaft is provided with a cable fixation. The cable fixation is suitable for fixing a cable bundle running inside of the hollow shaft body from a slip ring device to the hub. The hub flange can also be referred to as a rotor shaft flange. Cable bundles can be of different sizes and are usually used for controlling and powering actuators comprised in the hub or in the rotor blades. Another possible application of such a cable bundle is to transmit sensor signals from the hub or the rotor blades to the slip ring device. Cable bundles can easily be mounted inside of the hollow shaft body of the main shaft using the cable fixation.

In other typical embodiments the cable bundle and the cable fixation run from a slip ring flange to a rotor shaft flange. Sometimes, the hub flange is also referred to as the rotor shaft flange. Embodiments described herein are suitable for fixing a cable bundle between two flanges arranged at opposite ends of a hollow shaft body.

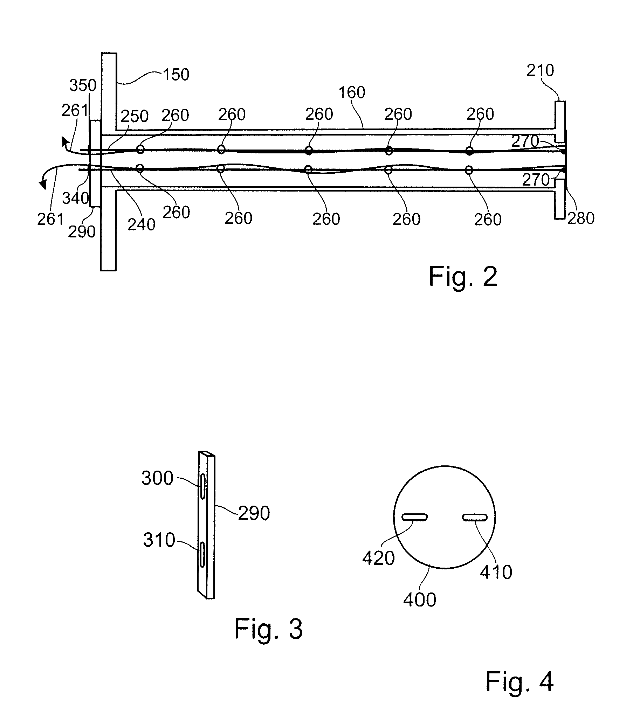

Fig: 2 is a schematic view of the main shaft of the wind energy system 100 of Fig. 1. In the description of Fig. 2, same reference numbers are used for same or equal parts as compared to the description of Fig. 1. In Fig. 2, the hollow shaft body 160 extends from a slip ring flange 210 to the hub flange 150. Inside of the hollow shaft body, there is arranged a cable fixation including two elongated members. Each of the elongated members includes steel wires 240, 250, respectively.

It is possible to use one elongated member. According to other typical embodiments, the cable fixation includes two elongated members, e.g. wires made of stainless steel. Alternatively, it is also possible to use more than two elongated members such as three, four or five. Three or more elongated members can particularly be useful for bigger cable bundles or in case more than one cable bundle is running through the hollow shaft body.

In typical embodiments the cable fixation includes at least one elongated member and is made of steel or another metal, e.g. aluminum or magnesium, typically alloyed aluminum or magnesium. Other light-weight metals can be used. Also light-weight composite structures like glass fibers or carbon fibers embedded in a matrix material are suitable for the cable fixation. According to embodiments described herein, wires are used which can be made of steel or some other of the above named materials. Wires under tension combine high strength with little weight. Hence, a light-weight cable fixation system may be provided.

According to typical embodiments, the elongated members are arranged in parallel. Typically, the elongated members are arranged in parallel with respect to the main axis of the hollow shaft body. According to other embodiments, elongated members are spun from side walls of the hollow shaft body providing a net-like structure inside the hollow shaft body.

In typical embodiments the cable fixation includes at least two wires. The two wires form the two elongated members. As mentioned before, in other embodiments more than two elongated members such as wires are used to fix the cable fixation. Typically, the wires are made of steel. In other embodiments, plastics or light weight composite materials such as resins with carbon fibers are used for the wires. The term "cable bundle" refers to cable bundles having at least one cable. Typical embodiments described herein are arranged for fixing a cable bundle having more than one cable, whereas also fixing of a cable bundle having a single cable is possible.

The cable fixation is adapted for fixing the cable bundle substantially free of axial stress. "Substantially" in this context refers typically to a situation wherein the cable bundle is not exposed to an axially directed force that is larger than 150N, more typically 100N or even more typically 50N. Therefore, slideable supports 260 may be provided along the wires 240, 250. The slideable supports 260 typically include releasable rings which are moveable along the wires 240, 250. The cable bundle comprises several cables with two being schematically illustrated in Fig. 2. The two cables shown are identified by reference sign 261.

In typical embodiments, moveable supports are provided. The moveable supports such as rings can typically slide on the elongated members allowing for a mounting of the cable bundle substantially free of axial stress. Due to the moveable supports, relative movements of the cables do not lead to a damage of the cables at edges or inside the shaft. Radial movements and bending of the cables can be reduced using embodiments described herein. The cable bundle can be protected more effectively. Therefore, fewer failures due to fatigue occur in operation. In the prior art the cables are constantly moving in bending movement caused by gravity. For instance, if a plastic tube is used for housing the cables, the tube and the cables are bent due to the gravity. Further, the cable bundle may stagger within the pipe at every rotation of the tube. This leads to a high fatigue occurrence. In typical embodiments described herein, however, the cable bundle is fixed between at least two elongated members such that radial movements of the cable bundle are reduced to a minimum. This can be achieved by arranging the at least two elongated members such that the cable bundle is aligned substantially with or on the longitudinal axis of the hollow shaft body.

In other embodiments, bearings are used which provide roller bearings and a fixation point for the cable bundle such that the cable bundle can be moved along the elongated members by rolling the roller bearings. Therefore a change of the cable bundle is made very easy.

At the slip ring flange 210 of the main shaft, the wires 240, 250 may be fixed to a first support. The first support typically includes steel rings 270 fixed to a support plate 280. The support plate 280 can be welded to the slip ring flange 210. According to other embodiments, it is glued or screwed to the slip ring flange. Typically a second support is arranged at the hub flange 150. The second support may include a support member 290 spanning from one side of the hub flange 150 to the opposite side of the hub flange 150. The support member 290 is used as a counterpart to the support plate 280, wherein the elongated members or wires 240, 250 are drawn between the support member 290 forming the second support and the support plate 280 forming the first support.

The term "connected" as used herein refers to all possible direct or indirect connections between the cable fixation and the hollow shaft body. "Indirect" in this context refers to a coupling via intermediate members such as a support. A support is defined as an object allowing a linking between the cable fixation and the hollow shaft body. According to some embodiments, at least two ends of the cable fixation are connected via some support to the hollow shaft body, for instance to a wall of the hollow shaft body, a flange of the hollow shaft body, or a fixation welded to the hollow shaft body.

In typical embodiments, the first support and the second support are connected to the hollow shaft body, wherein the cable fixation is drawn between the first support and the second support. The connection between the hollow shaft body and the first support is typically a welded connection on the side of the first support. The connection between the second support and the hub flange is typically a releasable connection. Possible releasable connections include screw fittings or snap fittings. In other embodiments other connections are possible, like providing a releasable connection on the side of the first support. Integrally formed supports such as rings welded directly to the wall of the hollow shaft body may also be useful.

In typical embodiments, the hub flange is adapted for connecting the hollow shaft with a wind energy system hub. Typically, the slip ring flange is adapted for connecting the hollow shaft body to a slip ring device. In other embodiments, the flanges are suitable for connecting other parts that form the opposite ends of the hollow shaft body. Typically, wind energy systems according to embodiments described herein can also provide main shafts having several sections which are fitted together using flanges. Such flanges are also suitable for being used as a support for the cable fixation.

Hence, various aspects of the invention allow for the cable bundle to be easily fixed in a secure position and a mounting and an exchange of the cable bundle are made easy.

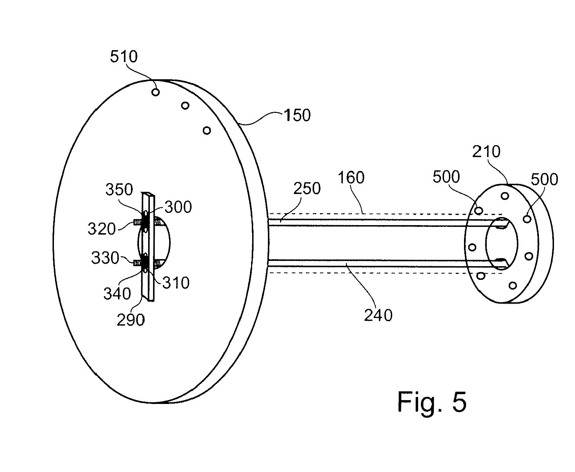

The bar-like support member 290 of the embodiment of Fig. 2 is shown in more detail in Fig. 3. The support member 290 may be formed as a bar including two oblong through-holes 300 and 310. Each of the through-holes 300 and 310 is used to fix an end of the two steel wires 240 and 250 respectively. According to embodiments described herein, thread studs 320 and 330 (shown in Fig. 5) are provided at the end of the steel wires 240 and 250 and are guided through the through-holes 300 and 310. For clarity reasons, the thread studs 320 and 330 are omitted in Fig. 2 and are shown in Fig. 5. They may be part of the tensioners. Furthermore, the tensioners shown in Fig. 5 include nuts 340 and 350, which are screwed onto the thread studs 320 and 330 respectively such that the ends of the steel wires 240 and 250 are fixed in the through-holes 300 and 310. The wires are tensioned by tightening the nut 340 on the thread stud 320 and by tightening the nut 350 on the thread stud 330.

The term "tensioner" as used herein embraces all devices that are adapted for applying a force to the cable fixation to maintain it in tension, e.g. hydraulic devices or a threaded rod with a nut. According to some embodiments the amount of force is adjustable, e.g. by adjusting the hydraulic pressure or by rotating the nut on the threaded rod.

The oblong through-holes 300 and 310 provide a possibility to vary the distance between the elongated members which can be, for instance, the steel wires 240 and 250 as described with respect to Fig. 2. According to typical embodiments combinable with all embodiments described herein, the cable fixation allows varying the distance between the at least two elongated members in order to allow arranging cable bundles of different widths. For instance, by providing the through-holes, the elongated members are moveable in a radial direction for adjusting to different cable bundle widths. According to other typical embodiments, several through-holes with different radial positions are arranged for receiving the elongated members. Furthermore, mounting rails arranged in a radial direction with respect to the axis of the hollow shaft body provide a possibility for fixing the elongated members in different radial positions.

In typical embodiments the second support comprises a support member that is connected to the hub flange and that comprises at least one through-hole for supporting the cable fixation. Typically two through-holes are provided in the support member for two elongated fixation members. In other embodiments more through-holes are provided allowing more elongated members or wires to be fixed. More generally, according to embodiments, the number of through-holes provided is identical to the number of elongated fixation members.

Typically, a bar-like support member is used. In other embodiments described herein, the support member is formed like a round plate 400 with two through-holes 410 and 420. Fig. 4 shows such an embodiment of a support member. The round plate 400 is placed onto the hub flange 150. Again, the through-holes 410 and 420 of the round plate 400 are formed as oblong holes. Typically, the oblong direction of the through-holes is in a radial direction of the round plate such that the distance between the fixed elongated members can be varied.

In typical embodiments the tensioner comprises a thread stud being connected to the cable fixation which is, according to some embodiments, the elongated member. The tensioner includes typically a thread stud and a nut screwed onto the thread stud. This is explained in more detail above. In other embodiments, the tensioner comprises a hydraulic device or a ratchet for tensioning. A ratchet can easily be mounted to a steel wire and typically includes fixation means to fix the ratchet at one of the supports.

In Fig. 5, the embodiment of Fig. 2 is shown schematically in another angle of view whereas same reference signs are used for the same parts. Therefore, a description of some parts mentioned in conjunction with Fig. 2 is omitted. For the sake of clarity, the cable bundle is not shown in Fig. 5. The hollow shaft body is shown in dotted lines, such that the cable fixations 240 and 250 inside of the hollow shaft body are visible. According to the embodiment exemplarily shown with respect to Fig. 5, the slip ring flange 210 includes holes 500 for fixing the slip ring flange to a slip ring device. Furthermore, some holes 510 of the hub flange are shown, that may be provided in the hub flange for fixing the hub to the main shaft of the wind energy system.

The term "applying" as used herein with respect to the method of constructing embraces all techniques for connecting the cable fixation directly to the hollow shaft body or indirectly to the hollow shaft body, e.g. by means of a support. Examples for such a support are flanges, plates and the like. Typically, the support is mounted into the hollow shaft body or the fixation rings that are typically connected to the hollow shaft body. Mounting can be performed e.g. by welding, gluing, screwing or the like. According to embodiments described herein, the connection between the hollow shaft and the cable fixation is releasable. Typically, the connection can be made adjustable such that the cable fixation can be adjusted to different sizes or diameters of different cable bundles.

This written description uses examples to disclose the invention, including the preferred mode, and also to enable any person skilled in the art to make and use the invention. While the invention has been described in terms of various specific embodiments, those skilled in the art will recognize that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are now defined in the following numbered clauses:
1. A shaft for use in a wind energy system, with the shaft having
   a hollow shaft body;
   a cable fixation being connected to said hollow shaft body and extending axially in the hollow shaft body, said cable fixation being adapted for fixing a cable bundle; and
   a tensioner being adapted for tensioning said cable fixation in an axial direction of said hollow shaft body.
2. The shaft according to clause 1 wherein said cable fixation comprises at least two elongated members.
3. The shaft according to any preceding clause wherein said cable fixation comprises at least two wires.
4. The shaft according to any preceding clause wherein said cable fixation being adapted for fixing said cable bundle substantially free of axial stress.
5. The shaft according to any preceding clause wherein said tensioner comprises a thread stud being connected to said cable fixation.
6. The shaft according to any preceding clause wherein said at least two elongated members are moveable in a radial direction for adjusting a distance between said at least two elongated members.
7. The shaft according to any preceding clause further comprising a first support and a second support, said first support and said second support being connected to the hollow shaft body, wherein said cable fixation is drawn between said first support and said second support.
8. The shaft according to any preceding clause wherein said first support is connected to a slip ring flange of said hollow shaft body.
9. The shaft according to any preceding clause wherein said second support is connected to a hub flange of said hollow shaft body, said hub flange being adapted for connecting said hollow shaft body with a wind energy system hub.
10. The shaft according to any preceding clause wherein said second support comprises a support member being connected to said hub flange and comprising at least one through-hole for supporting said cable fixation.
11. A fixation device comprising a cable fixation being connectable to a hollow shaft body and being adapted for fixing a cable bundle in said hollow shaft body, the fixation device comprising a tensioner being adapted for tensioning said cable fixation in an axial direction of the hollow shaft body.
12. The fixation device according to clause 11 wherein said cable fixation comprises at least two wires
13. The fixation device according to clause 11 or 12 wherein said cable fixation being adapted for fixing said cable bundle substantially free of axial stress.
14. The fixation device according to any of clauses 11 to 13 wherein said at least two wires are moveable in a radial direction for adjusting a distance between said at least two elongated members.
15. The fixation device according to any of clauses 11 to 14 further comprising a first support and a second support, said first support and said second support being connected to the hollow shaft, wherein said cable fixation is drawn between said first support and said second support.
16. Wind energy system having a shaft, with the shaft having a hollow shaft body;
   a cable fixation being connected to said hollow shaft body and extending axially in the hollow shaft, said cable fixation being adapted for fixing a cable bundle; and
   a tensioner being adapted for tensioning said cable fixation in an axial direction of said hollow shaft body.
17. Wind energy system according to clause 16 wherein said cable fixation comprises at least two wires.
18. Wind energy system according to clause 16 or 17 wherein said cable fixation being adapted for fixing said cable bundle substantially free of axial stress.
19. Wind energy system according to any of clauses 16 to 18 wherein said at least two wires are moveable in a radial direction for adjusting a distance between said at least two wires.
20. A method for constructing a fixation device for use in a wind energy system, said method comprising
   providing a cable fixation;
   mounting said cable fixation in a hollow shaft body of a main shaft of said wind energy system, said cable fixation being adapted for fixing a cable bundle; and
   tensioning said cable fixation in an axial direction of said hollow shaft body.

## Claims

1. A shaft for use in a wind energy system (100), with the shaft having
a hollow shaft body (160);
a cable fixation being connected to the hollow shaft body (160) and extending axially in the hollow shaft body (160), the cable fixation being adapted for fixing a cable bundle (261); and
a tensioner being adapted for tensioning the cable fixation in an axial direction of the hollow shaft body (160).

2. The shaft according to claim 1 wherein the cable fixation comprises at least two elongated members (240, 250).

3. The shaft according to any of the preceding claims wherein the cable fixation comprises at least two wires (240, 250).

4. The shaft according to any of the preceding claims wherein the cable fixation being adapted for fixing the cable bundle (261) substantially free of axial stress.

5. The shaft according to any of the claims 2 to 4 wherein the at least two elongated members (240, 250) are moveable in a radial direction for adjusting a distance between the at least two elongated members (240, 250).

6. The shaft according to any of the preceding claims further comprising a first support and a second support, the first support and the second support being connected to the hollow shaft body (160), wherein the cable fixation is drawn between the first support and the second support.

7. The shaft according to claim 6 wherein the first support is connected to a slip ring flange (210) of the hollow shaft body (160).

8. The shaft according to claim 6 or 7 wherein the second support is connected to a hub flange (150) of the hollow shaft body (160), the hub flange (150) being adapted for connecting the hollow shaft body (160) with a wind energy system hub (130).

9. A wind energy system (100) having a shaft according to any of the preceding claims.

10. A method for constructing a fixation device for use in a wind energy system (100), the method comprising
providing a cable fixation;
mounting the cable fixation in a hollow shaft body (160) of a main shaft of the wind energy system, the cable fixation being adapted for fixing a cable bundle (261); and;
tensioning the cable fixation in an axial direction of the hollow shaft body (160).
